# EUROPEAN PATENT SPECIFICATION

(11) **EP 1 598 230 B1**
(45) Date of publication and mention of the grant of the patent: **21.11.2007**
(21) Application number: 05007310.5
(22) Date of filing: 04.04.2005
(51) Int. Cl.: B60K 1/04, B60K 6/20, B60K 11/08

(54) **Electric vehicle with battery mounting structure**
Elektrofahrzeug mit Batteriebefestigung
Véhicule électrique avec support de batterie

(30) Priority: 18.05.2004 JP 2004147747; 06.08.2004 JP 2004231515
(43) Date of publication of application: 23.11.2005
(73) Proprietor: HONDA MOTOR CO., LTD., Tokyo (JP)
(72) Inventor: Nakagawa, Mitsuo, Wako-shi, Saitama (JP); Ozeki, Takashi, Wako-shi, Saitama (JP); Ariga, Kyoichi, Wako-shi, Saitama (JP); Kitayama, Kyosuke, Wako-shi, Saitama (JP)
(74) Representative: Liska, Horst

(56) References cited:
- EP-A- 0 539 269
- EP-A- 1 270 302
- DE-A1- 4 445 738
- FR-A- 2 735 076
- US-A- 4 658 925
- US-A- 4 964 484
- PATENT ABSTRACTS OF JAPAN vol. 017, no. 459 (M-1467), 23 August 1993 (1993-08-23) & JP 05 105142 A (YAMAHA MOTOR CO LTD), 27 April 1993 (1993-04-27)

## Description

The present invention relates an electric vehicle with a battery mounting structure according to the preamble of claim 1, which can be run using a motor as a driving source.

An electric vehicle usually has a large battery for driving a motor and has a problem of a location for arranging it, however, as to a vehicle in which a front frame is extended from a head pipe toward the rear of the body diagonally downward, there is an example (for example, refer to a patent document 1) in which a battery is provided along the front frame.

In JP-A No. 105142/1993, which discloses an electric vehicle according to the preamble of claim 1, in a motorcycle in which a front pipe is extended diagonally downward from a head pipe toward the rear of the body, structure where the bottom of a battery box is fastened to a bracket welded to the front pipe by a bolt, the front of a battery housed in the battery box is covered with an inner fender, the rear is covered with a cover for closing an opening of a leg shield and the battery is arranged in closed space is disclosed.

A motor for running an electric vehicle greatly consumes power and a battery for supplying power to this has a great calorific value.

In addition, in JP-A No. 105142/1993 , as the battery attached to the front pipe via the bracket is arranged in the closed space, heat is easily accumulated.

Document FR-A-2 735 076 discloses an electric vehicle, wherein the battery is cooled by running wind.

The invention is made in view of such a problem and the object is to provide the battery mounting structure of an electric vehicle in which the cooling efficiency of a battery is enhanced by efficiently utilizing running wind.

To achieve the object, the electric vehicle according to Claim 1 is provided with a body frame where a front frame is extended diagonally backward from a head pipe toward the rear of the body and which can be run using a motor as a driving source and is characterized in that a battery for supplying power to the motor is attached to the front frame of the body frame in such configuration that the cooling face of the battery is directly exposed to running wind.

The invention according is further characterized in that plural batteries attached to the front frame of the body frame are arranged in a circumferential direction and an interval between each battery is wider in each lower part than an interval in each upper part.

As the battery is attached to the front frame in which running wind concentrates and the cooling face is configured so that it is directly exposed to the running wind, cooling efficiency can be greatly enhanced.

The embodiment of the invention according to Claim 2 is based upon the battery mounting structure of the electric vehicle according to Claim 1 and is characterized in that cooling fins are provided to the cooling face of the battery.

The cooling efficiency of the battery can be more enhanced by providing the cooling fins to the cooling face of the battery.

As battery capacity can be secured by the plural batteries and an interval between the plural batteries attached to the front frame is wider in each lower part than an interval in each upper part, footrest space provided at the back is easily secured.

The embodiment of the invention according to Claim 3 is based upon the battery mounting structure of the electric vehicle according to any of Claims 1 or 2 and is characterized in that the battery is arranged on the left and on the right with the front frame of the body frame between the batteries and another battery is arranged along the front frame.

As the battery capacity is secured by the plural batteries, the battery is arranged on the left and on the right with the front frame between them and another battery is arranged along the front frame, the efficiency of space for arranging the batteries can be enhanced.

An interval between each battery can be suitably kept and the effect of heat between the batteries can be reduced.

The embodiment of the invention according to Claim 4 is based upon the battery mounting structure of an electric vehicle according to any of Claims 1 to 3 and is characterized in that the battery is covered with a front cover and a rear cover from the front and the rear of the body and a cooling wind intake is formed on a front wall that faces the front of the body of the front cover.

As the battery is covered with the front cover and the rear cover from the front and the rear, the battery can be protected from the splashes of mud and a stone in running and the durability can be enhanced.

As the cooling wind intake is formed on the front wall that faces the front of the body of the front cover, running wind is easily taken in, is directly hit on the battery, and the cooling efficiency of the battery can be enhanced.

The appearance quality is enhanced by covering the battery with the front cover and the rear cover.

The embodiment of the invention according to Claim 5 is based upon the battery mounting structure of the electric vehicle according to Claim 4 and is characterized in that a louver is provided to the cooling wind intake.

The louver can substantially prevent a stone, mud and others from invading from the cooling wind intake by providing the louver to the cooling wind intake, even if a stone and others invade, they invade after they are hit on the louver and can be prevented from being directly hit on the battery.

The embodiment of the invention according to Claim 6 is based upon the battery mounting structure of the electric vehicle according to Claim 4 or 5 and is characterized in that a cooling wind exhaust port is formed on the rear cover.

As the cooling wind exhaust port is formed on the rear cover, cooling wind taken from the cooling wind intake of the front cover can form a smooth flow of the cooling wind led to the cooling wind exhaust port, air resistance can be reduced, and specific fuel consumption can be reduced.

The embodiment of the invention according to Claim 7 is based upon the battery mounting structure of the electric vehicle according to Claim 6 and is characterized in that the cooling wind exhaust port is formed on the side wall of the rear cover overlapped with the side wall of the front cover inside when they are viewed from the side of the vehicle.

As the cooling wind exhaust port formed on the side wall of the rear cover has structure in which the side wall of the front cover covers the outside, the invasion of a stone, mud and others from the cooling wind exhaust port can be possibly prevented.

As the cooling wind exhaust port is covered with the side wall of the front cover, it is invisible from the outside, and the appearance quality can be enhanced.

The embodiment of the invention according to Claim 8 is based upon the battery mounting structure of the electric vehicle according to Claim 6 or 7 and is characterized in that a louver is provided to the cooling wind exhaust port.

As the louver is provided to the cooling wind exhaust port, the invasion of a stone, mud and others from the cooling wind exhaust port can be made more and more difficult.

Certain preferred embodiments of the present invention will hereinafter be described in detail, by way of example only, with reference to the accompanying drawings.
Fig. 1 is a side view showing the whole of a scooter-type electric motorcycle equivalent to one embodiment of the invention;
Fig. 2 is a plan in which a part of the motorcycle is omitted;
Fig. 3 is a sectional view showing its cross section cut along a line III-III in Fig. 1;
Fig. 4 is a perspective view showing structure for mounting a battery structural component on a body frame;
Fig. 5 is a front view showing the structure;
Fig. 6 is a side view showing the structure;
Fig. 7 is a rear view showing the structure;
Fig. 8 is a front view showing the structure from which a battery cover and others are detached;
Fig. 9 is a front view showing the battery structural component;
Fig. 10 is a sectional view showing a cross section cut along a line X-X in Fig. 1;
Fig. 11 is a sectional view showing a section cut along a line XI-XI in Fig. 9;
Fig. 12 is a side view showing the whole of a scooter-type electric motorcycle equivalent to another embodiment; and
Fig. 13 is a sectional view viewed along a line XIII-XIII in Fig. 12.

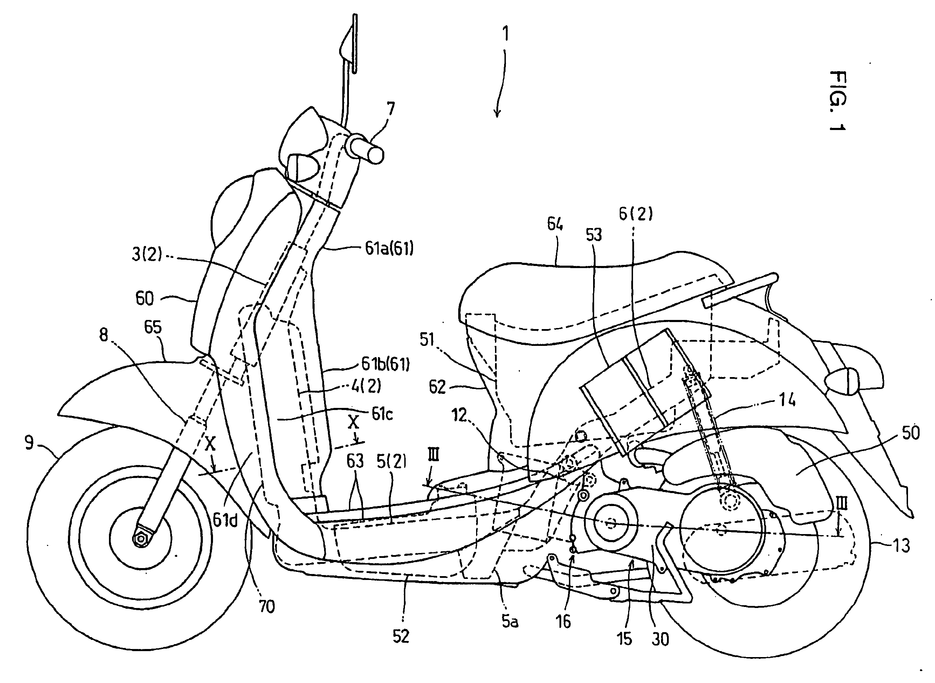

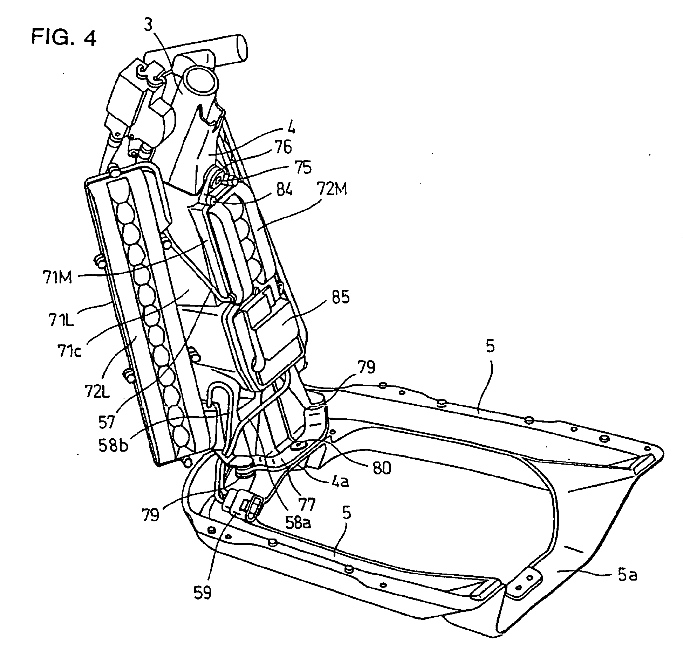

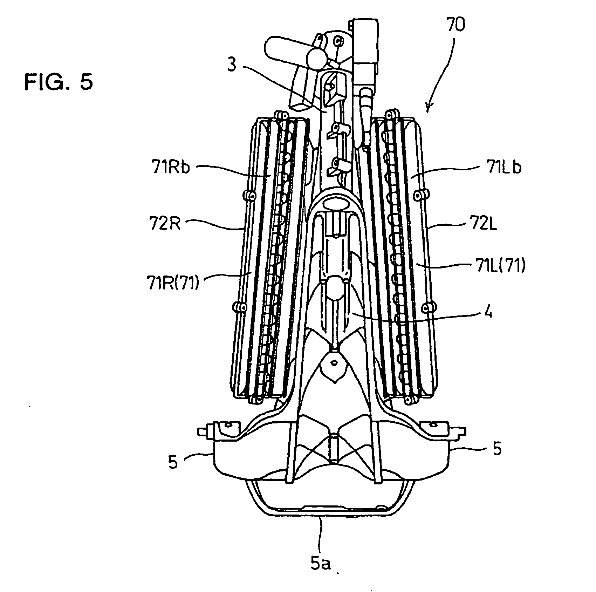

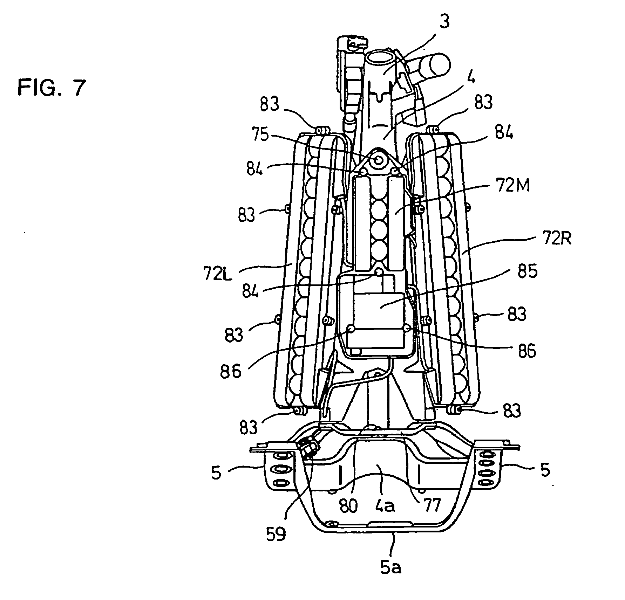

Referring to Figs. 1 to 11, one embodiment of the invention will be described below.

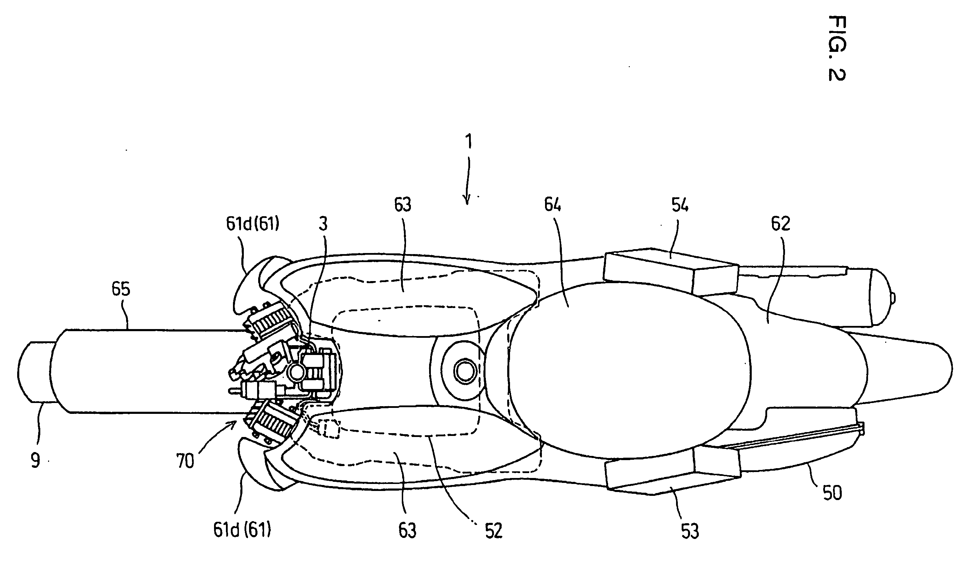

An electric vehicle equivalent to this embodiment is a hybrid scooter-type electric motorcycle 1 mounting an internal combustion engine, Fig. 1 is its side view, and Fig. 2 is a plan a part of which is cut out.

A body frame 2 of this scooter-type electric motorcycle 1 is formed by a front frame 4 extended backward and diagonally downward from a head pipe 3, a pair of intermediate frames 5 curved backward after they are branched laterally from its lower end and extended substantially horizontally and a pair of right and left rear frames 6 each front end of which is coupled to each rear end coupled by a cross member 5a of the intermediate frames 5 and which are extended backward and diagonally upward.

A handlebar 7 is supported by the head pipe 3 so that the handlebar can be turned, a front fork 8 is extended integrally with the handlebar 7 below the head pipe 3, and a front wheel 9 is supported by its lower end.

In the meantime, a power unit 15 the front upper part of which is supported by a link mechanism 12 via a bracket is located in a longitudinally central position of the rear frame 6 so that the rear can be vertically rocked and a rear cushion 14 is inserted between the rear of the power unit 15 and the rear of the rear frame 6.

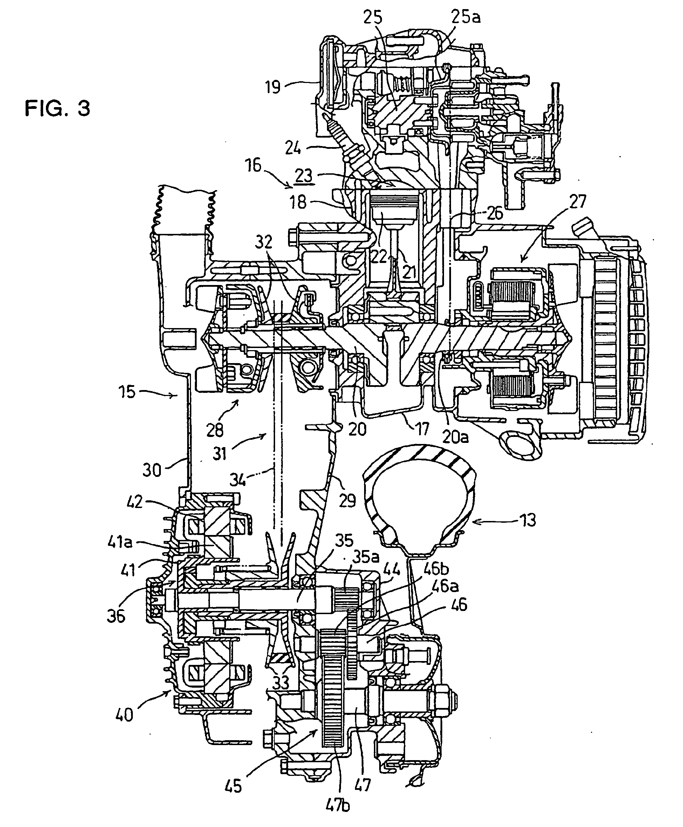

As for the power unit 15, an internal combustion engine 16, a transmission system 30 and a rear wheel 13 are integrated, as described above, the power unit is a unit swing type the rear of which is vertically rocked, and referring to Fig. 3, the structure of the power unit 15 will be briefly described below.

As for the internal combustion engine 16, a cylinder 18a is inclined forward in a cylinder block 18 united with a crankcase 17 and a cylinder head 19 is fixed to the front face of the cylinder block 18.

A piston 22 coupled to a crankshaft 20 supported by the crankcase 17 via a connecting rod 21 is reciprocated in the cylinder 18a and a combustion chamber 23 is formed between the top face of the piston 22 in the cylinder 18a and the cylinder head 19.

A valve (not shown) for controlling the intake and the exhaust of air-fuel mixture into/from the combustion chamber 23 and an ignition plug 24 are arranged in the cylinder head 19, a camshaft 25 for opening and closing the valve is supported by the cylinder head, and the camshaft 25 is revolved by a cam chain 26 laid on respective sprockets 25a, 20a between the camshaft and the crankshaft 20.

An ACG starter motor 27 is provided to the right side in a direction of the body width of the crankshaft 20, and a clutch 28 and a drive pulley 32 of a continuously variable transmission 31 are provided to the left side in the direction of the body width.

The front of a transmission case 29 is bonded to the left side of the crankcase 17, the transmission case is extended backward, and a transmission cover 30 covers an opening on the left side of the transmission case 29.

A driven shaft 35 is supported horizontally in the lateral direction between the longitudinal transmission case 29 and the transmission cover 30 and at the back of the crankshaft 20, a V-belt 34 without an end is laid between a driven pulley 33 supported by the driven shaft 35 so that the driven pulley can be turned and the drive pulley 32, and the continuously variable transmission 31 is formed.

A one-way clutch 36 is inserted between the drive pulley 33 and the driven shaft 35 and an outer clutch integrated with the driven shaft 35 of the one-way clutch 36 forms an inner rotor 41 of a drive motor 40.

The drive motor 40 is provided with an outer stator 42 supported by the transmission case 30 around a magnet 41a of the inner rotor 41.

A speed reducing gear mechanism 45 is provided along the rear right side of the transmission case 29 in a state in which the speed reducing gear mechanism is covered with a gear cover 44 and motive power is transmitted from the drive shaft 35 to the rear wheel 13 via the speed reducing gear mechanism 45.

That is, the drive shaft 35 piercing the transmission case 29 rightward, an intermediate shaft 46 and a rear shaft 47 supporting the rear wheel 18 are arranged mutually in parallel in the gear cover 44, a first pair of speed reducing gears 35a, 46a are provided between the driven shaft 35 and the intermediate shaft 46, a second pair of speed reducing gears 46b, 47b are provided between the intermediate shaft 46 and the rear shaft 47, the revolution of the driven shaft 35 is reduced at predetermined speed reducing ratio and is transmitted to the rear wheel 13.

As described above, in the power unit 15, the motive power of the internal combustion engine 16 is transmitted from the crankshaft 20 to the rear wheel 13 via the clutch 28, the continuously variable transmission 31, the one-way clutch 36, the drive shaft 35 and the speed reducing gear mechanism 45, and in the meantime, the motive power of the drive motor 40 is transmitted from its inner rotor 41 to the rear wheel 13 via the drive shaft 35 and the speed reducing gear mechanism 45.

The drive motor 40 not only can assist the output of the internal combustion engine 16 as a motor but functions as a motor for converting the revolution of the driven shaft 35 to electric energy.

An air cleaner 50 is attached above the transmission case 29 of the swing unit-type power unit 15 described above.

A housing box 51 supported by the pair of right and left rear frames 6 of the body frame 2 is arranged over the internal combustion engine 16 in the power unit 15 and a fuel tank 52 is suspended from the intermediate frame 5 forming a rectangle together with the cross member 5a.

A battery structural component 70 is supported by the front frame 4 of the body frame 2.

As for the front of the body, a front cover 60 covers the front of the head pipe 3, a leg shield 61 covers the rear of the head pipe 3 and the rear of the battery structural component 70 supported by the front frame 4, as to the rear of the body, a rear cover 62 is provided in a state in which the rear cover covers the periphery of the housing box 51, footrest space is formed between the leg shield 61 and the rear cover 62, and a step floor 63 covers the fuel tank 52 suspended from the intermediate frame 5.

An opening on the upside of the housing box 51 inside the rear cover 62 is closed by a seat 64 so that the seat can be lifted.

A drive motor driver 53 built in a flat box is fixed to the left side of the rear cover 62 and an ACG motor driver 54 also built in a flat box is fixed to the right side.

As for the battery structural component 70 supported by the front frame 4 of the body frame 2, groups of nickel-metal hydride batteries 73M, 73L, 73R are fitted into respective central, left and right fitting concave portions of a battery case 71, battery covers 72M, 72L, 72R cover respective exposed parts, and the battery case 71 is fixed to the front frame 4.

Each battery is cylindrical and is arranged in one column in which a state in which each contact face is touched or proximate to be a group of batteries.

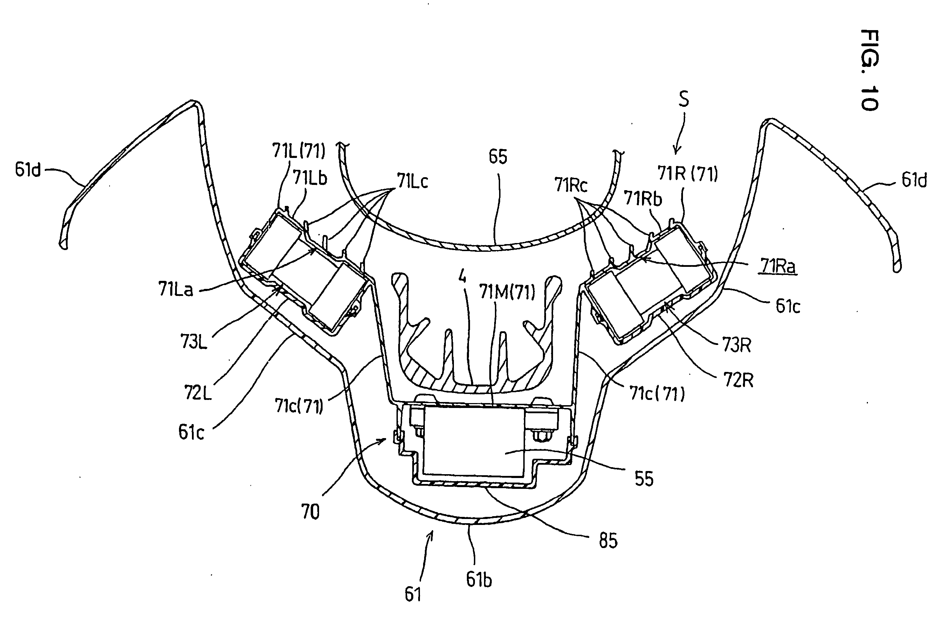

The battery case 71 is formed by a central case part 71M vertically extended along the back of the front frame 4 the cross section of which is substantially U-shaped as shown in Fig. 10, left and right coupling parts 71c, 71c along the left and right sides of the front frame 4 as a result of curving the left and right edges of the central case part 71M forward, a left case part 71L and a right case part 71R extended forward and diagonally from the respective edges of the left and right coupling parts 71c, 71c.

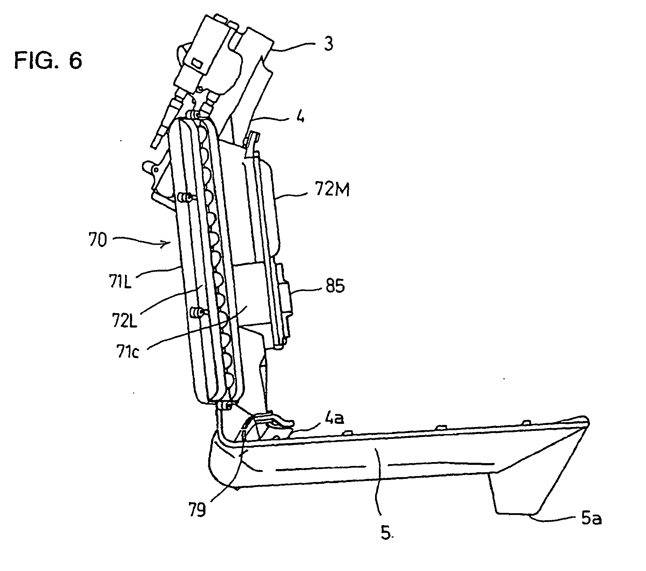

As the left case part 71L and the right case part 71R are substantially in parallel with the inclined front frame 4, they are inclined forward to some extent as shown in Fig. 6.

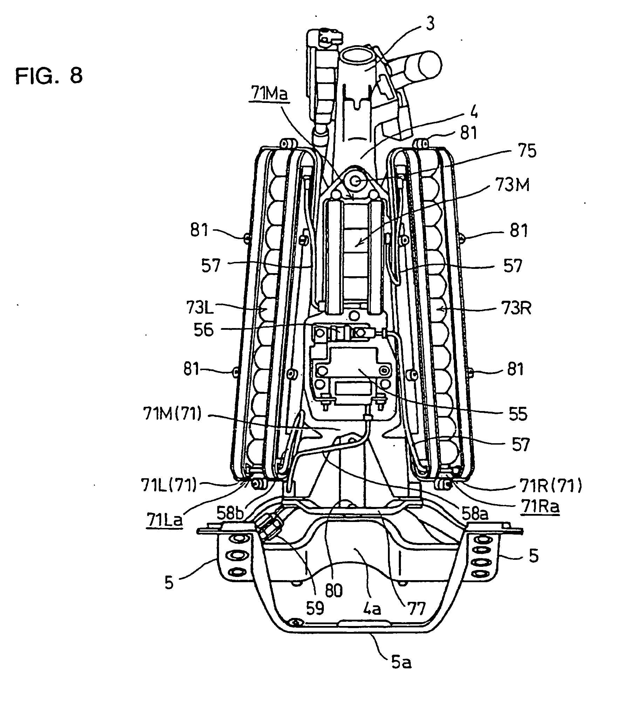

As shown in Fig. 8, a fitting concave portion 71Ma into which the central group of batteries 73M is fitted from a rear direction is formed in an upper half of the central case part 71M and fitting concave portions 71La, 71Ra into which the left group of batteries 73L and the right group of batteries 73R are fitted from a diagonally rear direction are formed in the left case part 71L and the right case part 71R fully lengthwise in a vertical direction.

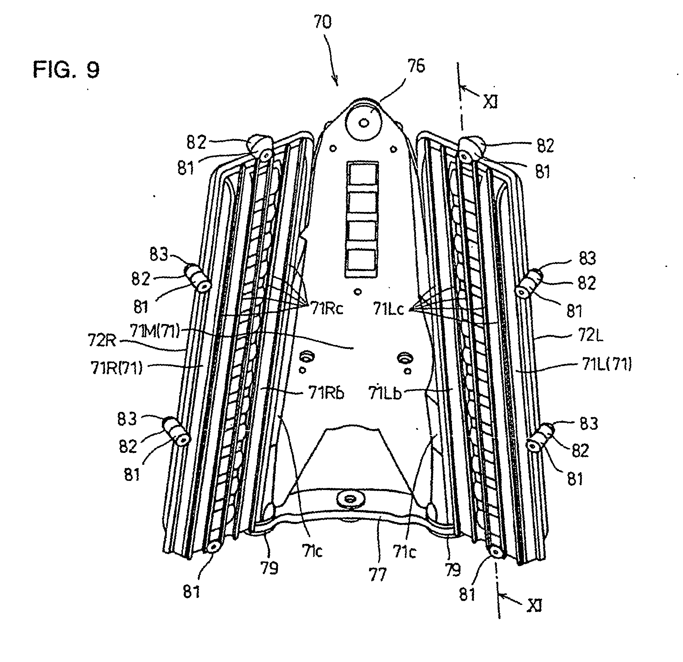

As for the central case part 71M, the width on the downside is wider than the width on the upside as shown in Fig. 9 and others and therefore, the respective lower parts of the left case part 71L and the right case part 71R laterally extended via the coupling parts 71c, 71c spread outside when they are viewed from the front.

The tapered upper end of the central case part 71M is fastened to the front frame 4 via a rubber elastic body 76 by a bolt 75, in the meantime, protrusions at the end of forked both lower ends are fitted into and fitted to grommets 79, 79 fitted into circular holes at the left and right ends of a coupling stay 77, and the center of the coupling stay 77 is fastened to a branched part 4a in a lower part of the front frame 4 connected to the left and right intermediate frames 5, 5 by a bolt 80.

That is, as for the battery case 71, the upper end of the central case part 71M is fastened to the upside of the front frame 4 and the coupling stay 77 attached to the lower end is fastened to the lower branched part 4a of the front frame 4.

Plural mounting bosses 81 where each female tapped hole is formed are formed in the marginal portion of each fitting concave portion 71La, 71Ra of the left case part 71L and the right case part 71R.

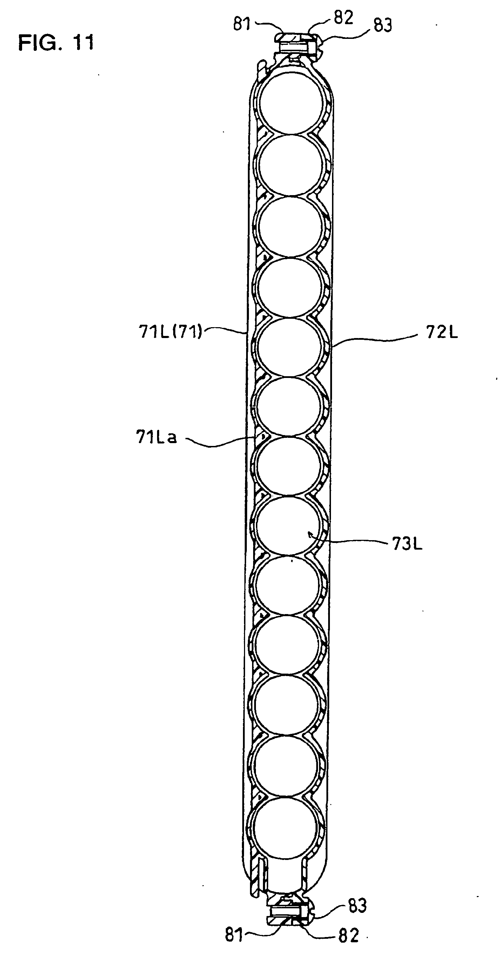

A left battery cover 72L and a right battery cover 72R which are respectively a long rectangle and in which a concave portion corresponding to each fitting concave portion 71La, 71Ra is formed are superimposed on the left case part 71L and the right case part 71R and house the left group of batteries 73L and the right group of batteries 73R inside together (see Fig. 11).

Mounting bosses 82 where each mounting hole is formed are formed in respective marginal parts of the left battery cover 72L and the right battery cover 72R corresponding to the mounting bosses 81 of the left case part 71L and the right case part 71R, and the left battery cover 72L and the right battery cover 72R can be fastened to the left case part 71L and the right case part 71R of the battery case 71 by inserting a clamp screw 83 into the hole of the mounting boss 82 and screwing it into the female tapped hole of the mounting boss 81 after superimposing the left battery cover 72L and the right battery cover 72R on the left case part 71L and the right case part 71R.

As shown in Fig. 11, the bottom of the fitting concave portion 71La of the left case part 71L is formed in a wavy form in which a semicircular face along a circumferential face of each cylindrical battery continues.

Similarly, the bottom of the corresponding concave portion of the left battery cover 72L is also formed in a wavy form in which a semicircular face along a circumferential face of each battery continues.

Therefore, each battery of the left group of batteries 73L housed between the left case part 71L and the left battery cover 72L has large area for incoming radiation from the left case part 71L or the left battery cover 72L, heat is easily transmitted, heat generated in the battery is easily radiated via the left case part 71L and the left battery cover 72L.

The right case part 71R and the right battery cover 72R also have the same structure.

Each five cooling fins 71Lc, 71Rc vertically directed are protruded from respective cooling faces 71Lb, 71Rb forward directed of the left case part 71L and the right case part 71R (see Fig. 9).

As shown in Fig. 10, the cooling fins 71Lc, 71Rc are protruded straight forward at an angle with the cooling faces 71Lb, 71Rb extended diagonally forward of the left case part 71L and the left battery cover 72L.

The fitting concave portion 71Ma into an upper half of which the central group of batteries 73M is fitted as shown in Fig. 8 is formed in the central case part 72M of the battery case 72, and a relay unit 55 and a fuse for a power source 56 are arranged in a lower part.

The groups of batteries 73M, 73L, 73R, the fuse for the power source 56 and the relay unit 55 are connected in series via a cable 57, and a cord on the plus side 58a extended from the relay unit 55 and a cord on the minus side 58b extended from the left group of batteries 73L are met in a coupler for connection 59.

The central group of batteries 73M fitted into the fitting concave portion 71Ma of the central case part 72M of the battery case 72 is covered with the central battery cover 72M, the circumference is fastened by clamp screws 84, the relay unit 55 and the fuse for the power source 56 are covered with a power circuit cover 85, and the power circuit cover is fastened by clamp screws 86.

The leg shield 61 in front of the footrest space is formed by an upper cover 61a that covers the head pipe 3 together with the front cover 60 from the front and the rear, a central cover on the downside 61b that continues from the upper cover 61a and covers the back of the battery structural component 70 supported by the front frame 4, inside leg shield parts 61c, 61c extended diagonally forward from the central cover on the downside 61b so that the left and the right of the battery structural component 70 are covered and outside leg shield parts 61d, 61d curved diagonally backward at the front edges of the inside leg shield parts 61c, 61c and extended symmetrically (see Figs. 1 and 10).

A front fender 65 extended forward from a center position between the inside leg shield parts 61c, 61c extended laterally of the leg shield 61 is integrated with the front fork 8 so that the front fender covers the front wheel 9.

Therefore, in view of the positional relation of the battery structural component 70 with the leg shield 61 and the front fender 65, as shown in Fig. 10, the battery structural component 70 is arranged together with the front frame 4 in space between the leg shield 61 extended laterally diagonally forward and the front fender 65 located in its center and in front.

The space between the leg shield 61 and the front fender 65 is circular arc-shaped space S the left and the right of which are open forward on a cross section shown in Fig. 10, the front frame 4 is located in the center of the circular arc-shaped space S, the central case part 71M, the central group of batteries 73M and the central battery cover 72M are located at the back, the left case part 71L, the left group of batteries 73L and the left battery cover 72L are located opposite to a left opening, and the right case part 71R, the right group of batteries 73R and the right battery cover 72R are located opposite to a right opening.

Therefore, as shown in Figs. 10 and 2, the cooling faces 71Lb, 71Rb of the left case part 71L and the right case part 71R in the battery structural component 70 are open forward and are directly exposed to running wind.

As the power consumption of the groups of batteries 73M, 73L, 73R when power is supplied to the drive motor 40 for driving the rear wheel 13 is great, a calorific value is also great, however, cooling efficiency is greatly enhanced by directly exposing the cooling faces 71Lb, 71Rb of the left case part 71L and the right case part 71R to collected running wind between the inside leg shield parts 61c, 61c of the leg shield 61 in which running wind is collected.

Besides, as the cooling fins 71Lc, 71Rc vertically directed are protruded from the cooling faces 71Lb, 71Rb partly inclined forward, running wind that directly hits on the cooling faces 71Lb, 71Rb is guided by the cooling fins 71Lc, 71Rc and as the running wind smoothly flows downward on the cooling faces 71Lb, 71Rb, robbing the heat, cooling efficiency can be enhanced more and more.

As running wind that does not hit on the cooling faces 71Lb, 71Rb of running wind that enters from the left and right openings of the circular arc-shaped space S between the leg shield 61 and the front fender 65 enters the central inside of the circular arc-shaped space S, reaches the central case part 71M and the central battery cover 72M and flows downward, the central group of batteries 73M is also cooled.

As in the battery structural component 70, the left group of batteries 73L and the right group of batteries 73R are arranged with the front frame 4 in the center and the central group of batteries 73M is arranged at the back of the front frame 4 along the front frame 4, the efficiency of space for arranging the groups of batteries is enhanced, an interval between each group of batteries can be suitably kept, and the effect of heat between the groups of batteries can be reduced.

Battery capacity can be secured by the plural groups of batteries 73M, 73L, 73R.

As each lower part of the left case part 71L and the right case part 71R spreads outside when it is viewed from the front, that is, as the left group of batteries 73L and the right group of batteries 73R are arranged in a state in which an interval between respective lower parts is widened when the groups of batteries are viewed from the front, the footrest space provided at the back of them via the leg shield 61 is easily secured.

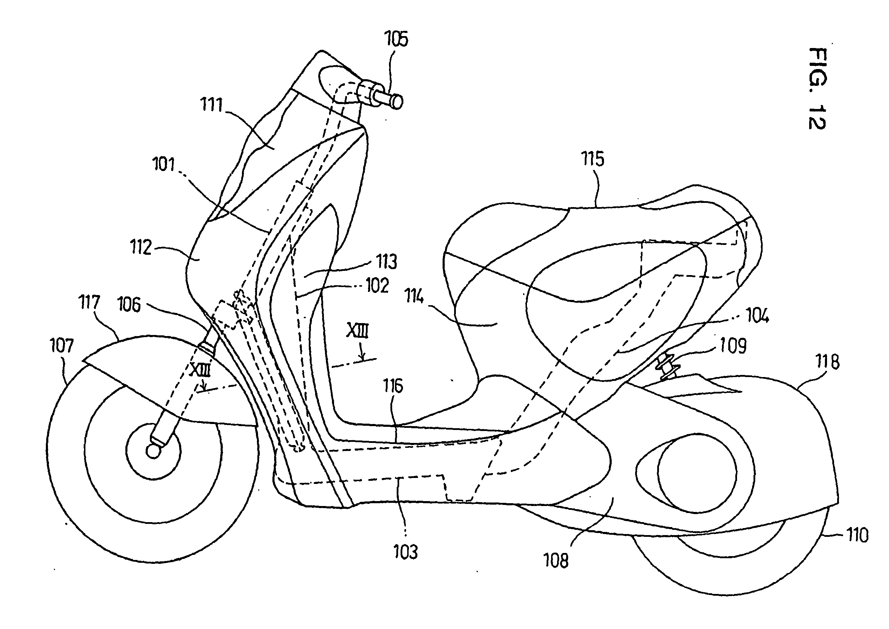

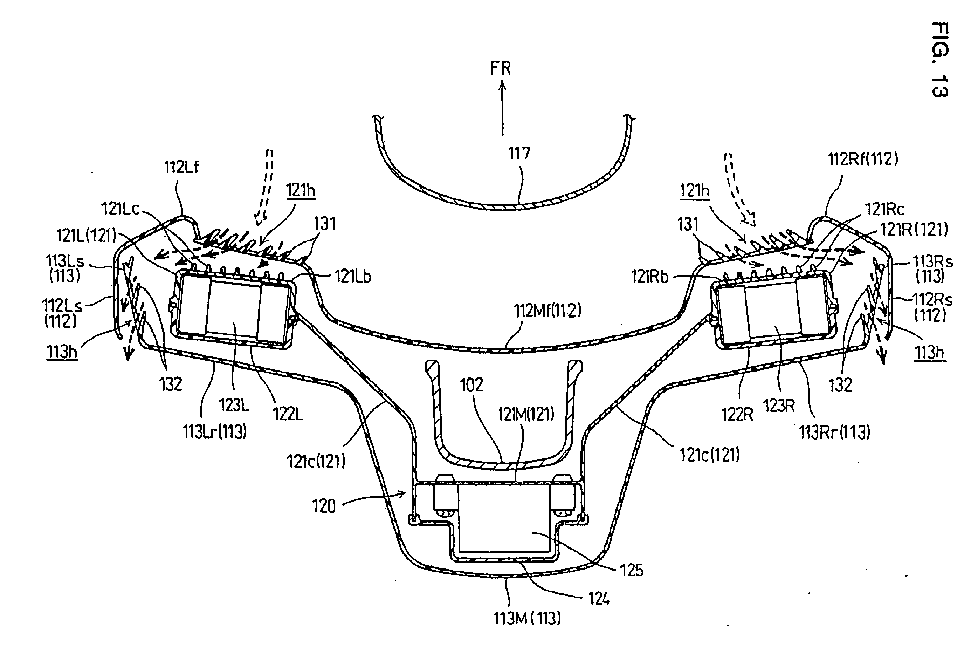

Next, referring to Figs. 12 and 13, another embodiment will be described.

Fig. 12 is a side view showing the whole of a scooter-type electric motorcycle 100 which is an electric vehicle equivalent to this embodiment.

This scooter-type electric motorcycle 100 has the basically same structure as that of the scooter-type electric motorcycle 1 equivalent to the above-mentioned embodiment though they are different in appearance and its body frame is formed by a front frame 102 extended diagonally downward from a head pipe 101 toward the rear of the body, a pair of intermediate frames 103 curved backward after they are branched laterally from the lower end and extended substantially horizontally and a pair of right and left rear frames 104 each front end of which is coupled to each rear end of the intermediate frames 103 and which are extended backward and diagonally upward.

A handlebar 105 is supported by the head pipe 101 so that the handlebar can be turned, a front fork 106 integrated with the handlebar 105 is extended below the head pipe 101, a front wheel 107 is supported by its lower end, and a front fender 117 covers the front wheel 107.

In the meantime, a power unit 108 the front of which is linked with the center of the rear frame and which is provided with a drive motor is provided so that the rear can be vertically rocked, a rear wheel 110 is supported by the rear end of the power unit 108 between which and the rear of the rear frame 104 a rear cushion 109 is inserted, and a rear fender 118 covers the rear wheel 110.

In the front of the body, a steering shaft supported by the head pipe 101 is covered with a front cover 111, a leg shield 112 covers the head pipe 101 and the front of the front frame 102 below the front cover, and an inner cover 113 covers the rear of the front frame 102.

In the rear of the body, a rear cover 114 is provided so that the circumference of a housing box is covered and an upper opening of the housing box inside the rear cover 114 is closed by a seat 115 so that the seat can be lifted.

Footrest space is formed between the inner cover 113 and the rear cover 114 and a step floor 116 is laid on the intermediate frames 103.

As shown in Fig. 13, a battery structural component 120 supported by the front frame 102 is formed by a central case part 121M in which a battery case 121 is vertically extended along the back of the front frame 102, left and right coupling parts 121c, 121c extended diagonally forward leftward and rightward along the left and right sides of the front frame 102 by forward curving the left and right edges of the central case part 121M, a left case part 121L and a right case part 121R extended outside leftward and rightward from the respective edges of the left and right coupling parts 121c, 121c like the battery structural component 70 in the above-mentioned embodiment.

A left group of batteries 123L and a right group of batteries 123R are fitted into each fitting concave portion open at the back of the left case part 121L and the right case part 121R respectively vertically long, and battery covers 122L, 122R cover each exposed part.

Respective plural cooling fins 121Lc, 121Rc vertically directed are forward protruded from cooling faces 121Lb, 121Rb forward directed of the left case part 121L and the right case part 121R.

A control mechanism such as a relay unit 125 is inserted into the central case part 121M and is covered with a central cover 124.

The battery structural component 120 described above and the front frame 102 are covered with the leg shield 112 and the rears are covered with the inner cover 113.

As shown in Fig. 13, the leg shield 112 is formed by a central front wall part 112Mf extended leftward and right ward along the front frame 102 in front of the front frame 102, a left front wall part 112Lf and a right front wall part 112Rf further extended outside leftward and rightward after slightly forward curving the left and the right of the central front wall part 112Mf, a left side wall part 112Ls and a right side wall part 112Rs acquired by backward curving the left and right ends of the left front wall part 112Lf and the right front wall part 112Rf.

Cooling wind intakes 121h, 121h vertically long and open forward are formed in each inside part of the left front wall part 112Lf and the right front wall part 112Rf, and a louver 131, 131 is provided to each cooling wind intake 121h, 121h.

Plural blades of the louver 131 are vertically long and are protruded diagonally forward toward the center of the body.

In the meantime, the inner cover 113 that covers the rear of the battery structural component 120 is formed by a central wall part 113M the cross section of which is U-shaped and which covers the relay unit 125 and others in the center of the battery structural component 120 from the rear to the left side/the right side, a left rear wall part 113Lr and a right rear wall part 113Rr acquired by extending the left and right ends of the central wall part 113M outside leftward and right ward, a left side wall part 113Ls and a right side wall part 113Rs acquired by curving the left and right ends of the left rear wall part 113Lr and the right rear wall part 113Rr forward and slightly diagonally outside.

The left side wall part 113Ls and the right side wall part 113Rs are located via a gap on each inside of the left side wall part 112Ls and the right side wall part 112Rs of the leg shield 112 and they are overlapped when the vehicle is viewed from the side.

Cooling wind exhaust ports 113h, 113h vertically long and open sideway are formed in the left side wall part 113Ls and the right side wall part 113Rs and a louver 132, 132 is provided to each cooling wind exhaust port 113h, 113h.

Respective plural blades of the louvers 132, 132 provided to the left side wall part 113Ls and the right side wall part 113Rs extended forward and slightly diagonally outside are protruded vertically long and substantially ahead of the vehicle.

As described above, the front and the rear of the battery structural component 120 are covered with the leg shield 112 and the inner cover 113, as shown in Fig. 13, the left side case part 121L and the right side case part 121R for fitting the left group of batteries 123L and the right group of batteries 123R are covered by the left front wall part 112Lf and the right front wall part 112Rf of the leg shield 112 which is a front cover and the left rear wall part 113Lr and the right rear wall part 113Rr of the inner cover 113 which is a rear cover in a longitudinal direction of the body, and each outside of the left side case part 121L and the right side case part 121R is doubly covered by the left side wall part 112Ls and the right side wall part 112Rs of the leg shield 112 and the left side wall part 113Ls and the right side wall part 113Rs of the inner cover 113.

The cooling wind intakes 121h, 121h are formed on the left front wall part 112Lf and the right front wall part 112Rf of the leg shield 112 in front of the left side case part 121L and the right side case part 121R, the louvers 131, 131 are provided, the cooling wind exhaust ports 113h, 113h are formed on the left side wall part 113Ls and the right side wall part 113Rs of the inner cover 113 outside the left side case part 121L and the right side case part 121R, and the louvers 132, 132 are provided.

Therefore, running wind from the front directly hits on the cooling faces 121Lb, 121Rb of the left side case part 121L and the right side case part 121R via the louvers 131, 131 from the cooling wind intakes 121h, 121h of the left front wall part 112Lf and the right front wall part 112Rf of the leg shield 112.

As for the louvers 131, 131, as plural blades are protruded diagonally forward toward the central side of the body, cooling wind invades diagonally outside as shown by broken arrows in Fig. 13, flows outside on the left and on the right along the cooling faces 121Lb, 121Rb of the left side case part 121L and the right side case part 121R, is guided by the left and right end curved parts of the leg shield 112, is directed toward the left side wall part 113Ls and the right side wall part 113Rs of the inner cover 113, turning backward along the left side case part 121L and the right side case part 121R, is guided by the plural blades of the louvers 132, 132 protruded forward, and is smoothly exhausted backward from the cooling wind exhaust ports 113h, 113h (see the broken arrows shown in Fig. 13).

As the cooling fins 121Lc, 121Rc vertically directed are protruded from the cooling faces 121Lb, 121Rb of the left side case part 121L and the right side case part 121R along which cooling wind flows, cooling wind is guided downward along the cooling fins 121Lc, 121Rc on each surface of the cooling faces 121Lb, 121Rb and gets through downward.

As described above, as running wind is guided by the louvers 131, 131 from the cooling wind intakes 121h, 121h of the leg shield 112, is taken in and the left side case part 121L and the right side case part 121R into which the left group of batteries 123L and the right group of batteries 123R are fitted are directly exposed to the smooth flow of cooling wind guided and exhausted by the louvers 132, 132 from the cooling wind exhaust ports 113h, 113h of the inner cover 113, the cooling efficiency of the left group of batteries 123L and the right group of batteries 123R can be enhanced.

As the cooling fins 121Lc, 121Rc are protruded from the cooling faces 121Lb, 121Rb of the left case part 121L and the right case part 121R, cooling wind is guided along the cooling fins 121Lc, 121Rc, smoothly flows downward on the cooling faces 121Lb, 121Rb, taking away heat, and cooling efficiency can be more and more enhanced.

As the louvers 131, 131 are provided to the cooling wind intakes 121h, 121h of the leg shield 112, they can substantially prevent the splashes of mud in running, flying gravel and others from invading from the cooling wind intakes 121h, 121h, even if flying gravel and others invade, they invade after they hit on the blades of the louvers 131, 131, are prevented from directly colliding with the groups of batteries 123L, 123R, the groups of batteries 123L, 123R are protected, and the durability can be enhanced.

As the louvers 132, 132 are provided to the cooling wind exhaust ports 113h, 113h of the inner cover 113 and the left side wall part 112Ls and the right side wall part 112Rs of the leg shield 112 cover the respective outsides, a stone, mud and others can be possibly prevented from invading from the cooling wind exhaust ports 113h, 113h.

As the battery structural component 120 is covered with the leg shield 112 and the inner cover 113 and is hidden, it is desirable in appearance quality and as the respective outsides of the louvers 132, 132 of the cooling wind exhaust ports 113h, 113h of the inner cover 113 are covered by the left side wall part 112Ls and the right side wall part 112Rs of the leg shield 112, the louvers 132, 132 are invisible from the outside, and the appearance quality can be enhanced.

As running wind is taken in from the cooling wind intakes 121h, 121h of the leg shield 112, smoothly flows and is exhausted from the cooling wind exhaust ports 113h, 113h of the inner cover 113, air resistance is small and specific fuel consumption can be reduced.

In the above-mentioned embodiment, the invention is applied to the scooter-type electric motorcycle, however, the invention can be also applied to an electric three-wheeled vehicle and an electric four-wheeled vehicle if only the vehicle is a vehicle provided with a body frame in which a front frame is extended from a head pipe to the rear of the body diagonally downward.

## Claims

1. Electric vehicle (1; 100) comprising a battery mounting structure, wherein said electric vehicle is provided with a body frame (2) where a front frame (4; 102) is extended from a head pipe (3; 101) toward the rear of the body diagonally downward and which is run using a motor as a driving source, wherein:
a battery (70; 120) for supplying power to the motor is attached to the front frame (4; 102) of the body frame (2) such that plural batteries (73M, 73L, 73R; 123L, 123R) attached to the front frame (4; 102) of the body frame are arranged in a circumferential direction,
**characterized in that** the radiating face of the battery (70; 120) is directly exposed to running wind, wherein an interval between each battery is wider in each lower part than an interval in each upper part.

2. The electric vehicle according to claim 1, wherein:
radiating fins (71 Lc, 71 Rc; 121 Lc, 121 Rc) are provided to the radiating face of the battery.

3. The electric vehicle according to any of claims 1 or 2, wherein:
the battery (73L, 73R) is arranged on the left and on the right with the front frame (4) of the body frame therebetween; and
another battery (73M) is arranged along the front frame.

4. The electric vehicle according to any of claims 1 to 3, wherein:
the battery is covered with a front cover (112) and a rear cover (113) from the front and the rear of the body; and
a cooling wind intake (121 h) is formed on a front wall that faces the front of the body of the front cover.

5. The electric vehicle according to claim 4, wherein:
a louver (131) is provided to the cooling wind intake (121 h).

6. The electric vehicle according to claim 4 or 5, wherein:
a cooling wind exhaust port (113h) is formed on the rear cover.

7. The electric vehicle according to claim 6, wherein:
the cooling wind exhaust port (113h) is formed on the side wall (113Ls, 113Rs) of the rear cover (113) overlapped with the side wall (112Ls, 112Rs) of the front cover (112) inside when they are viewed from the side of the vehicle.

8. The electric vehicle according to claim 6 or 7, wherein:
a louver (132) is provided to the cooling wind exhaust port (113h).

## Patentansprüche

1. Elektrofahrzeug (1; 100), das eine Batteriemontagestruktur umfasst, wobei das Elektrofahrzeug mit einem Karosserierahmen (2) versehen ist, bei dem sich ein vorderer Rahmen (4; 102) von einem Kopfrohr (3; 101) in Richtung zum hinteren Teil der Karosserie diagonal nach unten erstreckt, und das Elektrofahrzeug unter Verwendung eines Motors als Antriebsquelle fährt, wobei:
eine Batterie (70; 120) zum Zuführen von Leistung zum Motor am vorderen Rahmen (4; 102) des Karosserierahmens (2) angebracht ist, so dass mehrere Batterien (73M, 73L, 73R; 123L, 123R), die am vorderen Rahmen (4; 102) des Karosserierahmens angebracht sind, in einer Umfangsrichtung angeordnet sind,
**dadurch gekennzeichnet, dass**
die Kühlfläche der Batterie (70; 120) direkt dem Fahrtwind ausgesetzt ist, wobei ein Zwischenraum zwischen den jeweiligen Batterien in einem jeweiligen unteren Teil breiter ist als ein Zwischenraum in einem jeweiligen oberen Teil.

2. Elektrofahrzeug nach Anspruch 1, wobei:
Kühlrippen (71 Lc, 71 Rc; 121 Lc, 121 Rc) an der Kühlfläche der Batterie vorgesehen sind.

3. Elektrofahrzeug nach irgendeinem der Ansprüche 1 oder 2, wobei:
die Batterie (73L, 73R) auf der linken Seite und auf der rechten Seite mit dazwischenliegendem vorderen Rahmen (4) des Karosserierahmens angeordnet sind; und
eine weitere Batterie (73M) längs des vorderen Rahmens angeordnet ist.

4. Elektrofahrzeug nach irgendeinem der Ansprüche 1 bis 3, wobei:
die Batterie mit einer vorderen Abdeckung (112) und einer hinteren Abdeckung (113) von vorne und von hinten bezüglich der Karosserie abgedeckt ist; und
ein Kühlwindeinlass (121 h) an einer Vorderwand der vorderen Abdeckung ausgebildet ist, die der Vorderseite der Karosserie an zugewandt ist.

5. Elektrofahrzeug nach Anspruch 4, wobei:
ein Lüftungsgitter (131) am Kühlwindeinlass (121h) vorgesehen ist.

6. Elektrofahrzeug nach Anspruch 4 oder Anspruch 5, wobei:
eine Kühlwindauslassöffnung (113h) an der hinteren Abdeckung ausgebildet ist.

7. Elektrofahrzeug nach Anspruch 6, wobei:
die Kühlwindauslassöffnung (113h) an der Seitenwand (113Ls, 113Rs) der hinteren Abdeckung (113) ausgebildet ist, die mit der Seitenwand (112Ls, 112Rs) der vorderen Abdeckung (112) im Inneren überlappt, wenn diese von der Seite des Fahrzeugs aus betrachtet werden.

8. Elektrofahrzeug nach Anspruch 6 oder Anspruch 7, wobei:
ein Lüftungsgitter (132) an der Kühlwindauslassöffnung (113h) vorgesehen ist.

## Revendications

1. Véhicule électrique (1 ; 100) comprenant une structure de montage de batterie, dans lequel ledit véhicule électrique est pourvu d'un châssis de carrosserie (2), un châssis avant (4 ; 102) s'étendant depuis un tube frontal (3 ; 101) en direction de l'arrière de la carrosserie, en diagonale vers le bas, et qui fonctionne en utilisant un moteur en tant que source d'entraînement, dans lequel :
une batterie (70 ; 120) pour alimenter en énergie le moteur est fixée au châssis avant (4 ; 102) du châssis de carrosserie (2), de telle manière que plusieurs batteries (73M, 73L, 73R ; 123L, 123R) fixées au châssis avant (4 ; 102) du châssis de carrosserie sont agencées selon une direction circonférentielle,
**caractérisé en ce que** la face de rayonnement de la batterie (70 ; 120) est directement exposée au vent du mouvement, dans lequel un intervalle entre chaque batterie est plus large à chaque partie inférieure qu'un intervalle à chaque partie supérieure.

2. Véhicule électrique selon la revendication 1, dans lequel :
des ailettes de rayonnement (71Lc, 71Rc ; 121Lc, 121Rc) sont disposées sur la face de rayonnement de la batterie.

3. Véhicule électrique selon la revendication 1 ou 2, dans lequel :
la batterie (73L, 73R) est disposée sur la gauche et la droite, le châssis avant (4) du châssis de carrosserie s'interposant entre elles ; et
une autre batterie (73M) est disposée le long du châssis avant.

4. Véhicule électrique selon l'une quelconque des revendications 1 à 3, dans lequel :
la batterie est couverte d'un couvercle avant (112) et d'un couvercle arrière (113) à partir de l'avant et de l'arrière de la carrosserie ; et
une admission de vent de refroidissement (121h) est formée sur une paroi avant qui fait face à l'avant du corps du couvercle avant.

5. Véhicule électrique selon la revendication 4, dans lequel :
un volet d'aération (131) est disposé à l'admission de vent de refroidissement (121h).

6. Véhicule électrique selon la revendication 4 ou 5, dans lequel :
un orifice d'évacuation de vent de refroidissement (113h) est formé sur le couvercle arrière.

7. Véhicule électrique selon la revendication 6, dans lequel :
l'orifice d'évacuation de vent de refroidissement (113h) est formé sur la paroi latérale (113Ls, 113Rs) du couvercle arrière (113) en chevauchement avec la paroi latérale (112Ls, 112Rs) du couvercle avant (112) à l'intérieur en les regardant depuis le côté du véhicule.

8. Véhicule électrique selon la revendication 6 ou 7, dans lequel :
un volet d'aération (132) est disposé à l'orifice d'évacuation de vent de refroidissement (113h).
